# EUROPEAN PATENT SPECIFICATION

(11) **EP 2 955 090 B1**
(45) Date of publication and mention of the grant of the patent: **29.06.2016**
(21) Application number: 14196989.9
(22) Date of filing: 09.12.2014
(51) Int. Cl.: B62K 11/04, B62J 6/04, B62J 15/00, B62J 17/00, B60Q 1/30

(54) **Straddle type vehicle**
Grätschsitz-Fahrzeug
Véhicule de type à selle

(30) Priority: 10.06.2014 JP 2014119769
(43) Date of publication of application: 16.12.2015
(73) Proprietor: Yamaha Hatsudoki Kabushiki Kaisha, Iwata-shi, Shizuoka-ken 438 (JP)
(72) Inventor: Hashimoto, Naochika, Shizuoka-ken, 438-8501 (JP); Kurakake, Haruhito, Shizuoka-ken, 438-8501 (JP)
(74) Representative: Stöckeler, Ferdinand

(56) References cited:
- EP-A1- 1 700 779
- EP-A1- 2 463 184
- EP-A1- 2 540 601

## Description

### BACKGROUND OF THE INVENTION

### Field of the Invention

The present invention relates to a straddle-type vehicle.

### Description of Related Art

In a straddle-type vehicle such as a motorcycle, an exterior portion covering a body frame is provided to extend to a position further rearward than a seat (see JP 2009-61889 A, for example). The exterior portion at a rear portion of the vehicle (hereinafter referred to as a tail cover) prevents splashes such as dust, mud water or the like splashed by a rear wheel from coming into contact with a rider.

EP 2 540 601 A1 discloses a motorcycle rear portion structure of a motorcycle comprising a chassis frame, a rear wheel positioned below the rear portion of the chassis frame, a fender main body portion anchored to the rear portion of the chassis frame and positioned above the rear wheel, and a fender hanging portion configured separately from the fender main body portion and covering at least a portion of the rear wheel. A support stay is anchored to a rear end of the chassis frame, extends substantially horizontally from the rear end rearwards and supports the fender hanging portion.

### BRIEF SUMMARY OF THE INVENTION

In the straddle-type vehicle, it is desired that splashes such as dust, mud water or the like splashed by the rear wheel is reliably prevented from coming into contact with the rider. Further, it is desired that a mass of the rear portion of the vehicle is decreased in order to decrease the weight of the vehicle.

However, in the conventional configuration of the straddle-type vehicle, when the width of the tail cover is increased in order to prevent splashes from coming into contact with the rider, the mass of the rear portion of the vehicle is increased. On the other hand, when the width of the tail cover is decreased in order to decrease the weight of the rear portion of the vehicle, splashes are likely to come into contact with the rider. Therefore, it was difficult to realize both of the prevention of contact of splashes and a decrease in weight.

An object of the present invention is to provide a straddle-type vehicle in which splashes splashed by a rear wheel can be prevented from coming into contact with a rider while visibility of emitted light of a tail lamp unit is ensured, and a weight of a rear portion can be decreased.
(1) A straddle-type vehicle according to one aspect of the present invention includes a pair of right and left seat frames, a seat, supported by the pair of right and left seat frames above the pair of right and left seat frames, on which a driver is seated, a rear wheel arranged at a position further downward than the pair of right and left seat frames, a mud catcher that is located at a position further rearward than the seat and above the rear wheel, and extends rearward and downward from the pair of right and left seat frames, a tail lamp unit supported by the pair of right and left seat frames above the mud catcher, a tail cover arranged above the rear wheel and outside the seat frame and the tail lamp unit, a right expanded portion provided at a position further rightward than the tail cover in a vehicle width direction, and a left expanded portion provided at a position further leftward than the tail cover in the vehicle width direction, wherein the tail lamp unit has an emission surface having a measurement in a top-and-bottom direction that is larger than a measurement in the vehicle width direction at a rear end surface, the tail cover has a right side surface portion that extends in a front-and-rear direction at a position further rightward than the tail lamp unit, wherein the right expanded portion is arranged outside the right side surface portion, and a left side surface portion that extends in the front-and-rear direction at a position further leftward than the tail lamp unit, wherein the left expanded portion is arranged outside the left side surface portion, a right through hole that extends in the front-and-rear direction between the right expanded portion and the right side surface portion is formed, a left through hole that extends in the front-and-rear direction between the left expanded portion and the left side surface portion is formed, and a measurement in the vehicle width direction of the mud catcher is smaller than a measurement in the vehicle width direction from an outer end of the right expanded portion to an outer end of the left expanded portion, and larger than a measurement in the vehicle width direction from the right side surface portion to the left side surface portion.
   In this straddle-type vehicle, the mud catcher is provided above the rear wheel, and the tail lamp unit is supported by the pair of right and left seat frames above the mud catcher. The tail cover is arranged outside the tail lamp unit and the seat frames, and the right expanded portion and the left expanded portion are provided at the right and left of the tail cover, respectively. The measurement in the vehicle width direction of the mud catcher is smaller than the measurement in the vehicle width direction from the outer end of the right expanded portion to the outer end of the left expanded portion, and is larger than the measurement in the vehicle width direction of the tail cover.
   Thus, even when splashes such as dust, mud water or the like splashed by the rear wheel are blown up outside the mud catcher in the width vehicle direction, the splashes are caught by the right expanded portion and the left expanded portion. Therefore, even when the measurement in the vehicle width direction of the tail cover is small, splashes are prevented from coming into contact with the rider.
   Further, the right through hole is formed between the right side surface portion of the tail cover and the right expanded portion, and the left through hole is formed between the left side surface portion of the tail cover and the left expanded portion. An air stream flows through the right through hole and the left through hole during the travelling of the vehicle. Thus, an increase in air resistance is prevented, and a travelling feeling is improved. Further, splashes splashed by the rear wheel are blown off to a position further rearward than the vehicle by the air stream passing through the right through hole and the left through hole. Thus, splashes are less likely to come into contact with the rider.
   Further, the emission surface is provided at the rear end surface of the tail lamp unit, and the measurement in the vehicle width direction of the emission surface is smaller than the measurement in the top-and-bottom direction. Thus, it is possible to emit a sufficient amount of light to a position further rearward than the vehicle from the emission surface of the tail lamp unit without increasing the measurement in the vehicle width direction of the tail lamp unit and the tail cover. Therefore, it is possible to decrease the measurement in the vehicle width direction of the tail cover while visibility of the emitted light of the tail lamp unit is ensured.
   Thus, it is possible to prevent splashes splashed by the rear wheel from coming into contact with the rider and realize a decrease in the weight of the rear portion of the vehicle while the visibility of the emitted light of the tail lamp unit is ensured.
(2) The right expanded portion may extend outward in the vehicle width direction and obliquely downward from the right side surface portion of the tail cover, and may extend inward to reach the right side surface portion of the tail cover in a back view of the vehicle, and the left expanded portion may extend outward in the vehicle width direction and obliquely downward from the left side surface portion of the tail cover, and may extend inward to reach the left side surface portion of the tail cover, in the back view of the vehicle.
   In this case, splashes are caught by the right expanded portion and the left expanded portion, and splashes are prevented from coming into contact with the rider. Further, the air stream flows through the right through hole and the left through hole, so that the travelling feeling is improved, and splashes are unlikely to come into contact with the rider.
(3) Each of the right expanded portion and the left expanded portion may have a configuration in which an inner member and an outer member may overlap with each other, the inner member may form each of inner surfaces of the right expanded portion and the left expanded portion, and may have higher rigidity than the outer member, and the outer member may form each of outer surfaces of the right expanded portion and the left expanded portion, and may be lighter than the inner member.
   The weight of the right expanded portion and the left expanded portion can be decreased by the outer members while the rigidity of the right expanded portion and the left expanded portion is ensured by the inner members.
(4) Each of the right side surface portion and the left side surface portion may include a front region located below the seat and a rear region located at a position further rearward than the front region, in a side view of the vehicle, an upper end of the rear region may be at a position higher than an upper end of the front region, an upper end of the right expanded portion may extend along an upper end of the rear region of the right side surface portion, at least part of a lower end of the right expanded portion may extend along an upper end of the front region of the right side surface portion, an upper end of the left expanded portion may extend along an upper end of the rear region of the left side surface portion, and at least part of a lower end of the left expanded portion may extend along an upper end of the front region of the left side surface portion.
   In this case, the right expanded portion and the left expanded portion extend from the front regions to the rear regions of the right side surface portion and the left side surface portion of the tail cover, respectively. Therefore, areas of the right expanded portion and the left expanded portion in a plan view of the vehicle are sufficiently ensured. Therefore, splashes splashed by the rear wheel can be sufficiently prevented from coming into contact with the rider.
(5) The tail lamp unit may include a circuit board provided in the tail cover and has one surface facing a first region of the emission surface, a first light emitting device attached to the one surface of the circuit board to emit light to the first region of the emission surface, a second light emitting device attached to the one surface of the circuit board, and a light-guiding body provided in the tail cover and leads light emitted from the second light emitting device to a second region different from the first region of the emission surface.
   In this case, the light emitted from the first light emitting device is emitted to the first region of the emission surface, and the light emitted from the second light emitting device is led to the second region of the emission surface through the light-guiding body. Thus, a sufficient amount of light can be emitted to the first and second regions of the emission surface while a space occupied by the circuit board is decreased. Therefore, flexibility in design of the tail cover is improved.
(6) The first and second regions of the emission surface may be arranged in the top-and-bottom direction in the back view of the vehicle, the light-guiding body may include an incidence portion to which light emitted by the second light emitting device is incident, and an emission portion that is provided to extend in the top-and-bottom direction in the back view of the vehicle, and emits light incident to the incidence portion to the second region of the emission surface.
   In this case, a sufficient amount of light can be emitted to the first and second regions of the emission surface that are arranged in the top-and-bottom direction as viewed from behind while a space occupied by the circuit board is decreased.
(7) A rear end surface of the tail cover may be provided to obliquely extend upward from a lower end to an upper end, the circuit board may be arranged to extend in the top-and-bottom direction, the second region of the emission surface may be located at a position further upward than the first region, and the emission portion of the light-guiding body and the first light emitting device may be linearly arranged in the top-and-bottom direction in the back view of the vehicle.
   In this case, an area of the emission surface of the tail lamp unit can be ensured while an increase in measurement in the top-and-bottom direction of the tail cover is inhibited in the back view of the vehicle. Further, because the emission portion of the light-guiding body and the first light emitting device are linearly arranged in the top-and bottom direction, light is emitted from a linearly region as viewed from behind.
(8) The straddle-type vehicle may further include a support member that is used when the tail lamp unit is supported at the seat frame in the tail cover, and the support member may be configured to support a resistance member and a support tool to be detachably attachable.
   In this case, because the tail lamp unit, the tool and the resistance member are supported by the common support member, the number of components in the tail cover can be decreased. Thus, flexibility in the design of the tail cover is improved.

### BRIEF DESCRIPTION OF THE SEVERAL VIEWS OF THE DRAWING

Fig. 1 is a side view showing a motorcycle according to one embodiment of the present invention;
Fig. 2 is an external perspective view of a tail cover unit;
Fig. 3 is a side view of the tail cover unit;
Fig. 4 is a back view of the tail cover unit;
Fig. 5 is a front view of the tail cover unit;
Fig. 6 is a back view of the tail cover unit;
Fig. 7 is a plan view of the tail cover unit;
Fig. 8 is an external perspective view for explaining an air stream that passes through through holes;
Fig. 9 is a side view for explaining the air stream that passes through the through holes;
Fig. 10 is a side view of a tail lamp unit;
Fig. 11 is a top view of the tail lamp unit;
Fig. 12 is a schematic side view showing an inside of the tail lamp unit;
Fig. 13 is an external perspective view of circuit boards and a light-guiding body;
Fig. 14 is a back view of a circuit board and the light-guiding body arranged in a casing;
Figs. 15(a) to 15(c) are schematic diagrams for explaining light emitted from the tail lamp unit; and
Fig. 16 is an external perspective view showing a support member being attached to the tail lamp unit.

### DESCRIPTION OF THE PREFERRED EMBODIMENTS

A motorcycle will be described below as one example of a straddle-type vehicle according to embodiments of the present invention with reference to drawings.

### (1) Configuration of Motorcycle

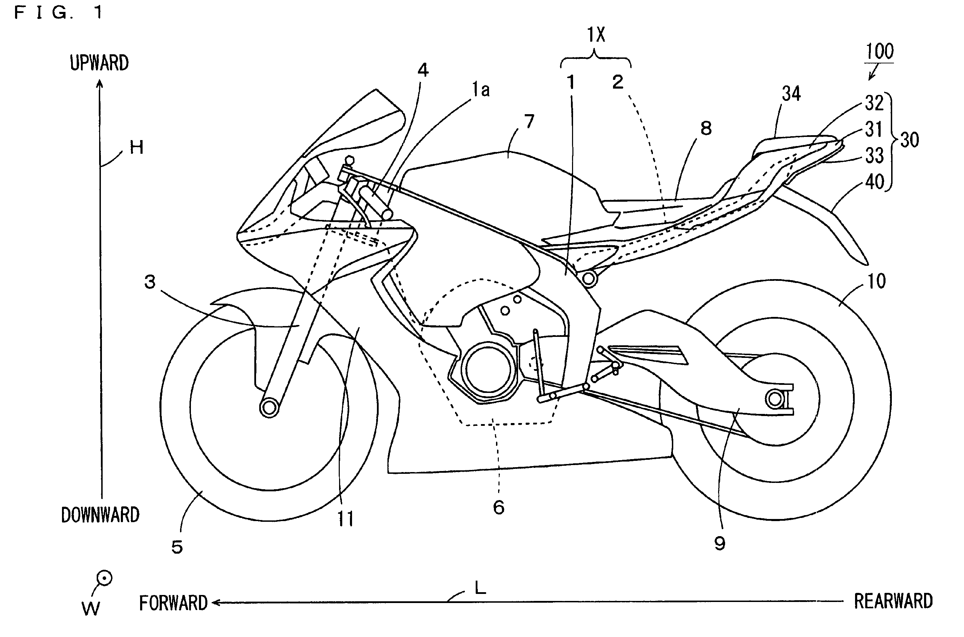

Fig. 1 is a side view showing the motorcycle according to one embodiment of the present invention. In Fig. 1 and each of a plurality of subsequent given diagrams, a front-and-rear direction L, a width direction W and a top-and-bottom direction H of the motorcycle 100 are indicated by arrows. In the front-and-rear direction L, a direction in which the arrow is directed is forward (forward of the vehicle) of the motorcycle 100, and its opposite direction is rearward (rearward of the vehicle) of the motorcycle 100. Further, in the following description, viewing the motorcycle 100 downward from a position above the motorcycle 100 is referred to as a plan view of the vehicle. Viewing the motorcycle 100 in the direction from one side position to the other side position in the width direction W of the motorcycle 100 is referred to as a side view of the vehicle. Viewing the motorcycle 100 forward from a position behind the motorcycle 100 is referred to as a back view of the vehicle.

As shown in Fig. 1, the motorcycle 100 includes a head pipe 1 a and a body frame 1X. The body frame 1X includes a main frame 1 and a pair of right and left seat frames 2. The main frame 1 is provided to extend rearward from the head pipe 1a. The seat frames 2 are provided to extend rearward from the main frame 1. The pair of right and left seat frames 2 may be integrally provided, or separately provided.

A front fork 3 is attached to the head pipe 1 a to be swingable rightward and leftward. A handle 4 is provided at the upper end of the front fork 3, and a front wheel 5 is rotatably supported at the lower end of the front fork 3. A body cover 11 is provided to cover at least part of each of the main frame 1, the seat frames 2 and the front fork 3.

An engine 6 and a fuel tank 7 are held by the main frame 1. The engine 6 is arranged below the fuel tank 7. A rear arm 9 is provided behind the engine 6. A rear wheel 10 is rotatably supported at the rear end of the rear arm 9 below the seat frames 2. In the back view of the vehicle, the rear wheel 10 is arranged below the seat frames 2. Further, in the plan view of the vehicle, part of the back wheel 10 is arranged behind the seat frames 2.

A main seat 8 is supported by the seat frames 2 behind the fuel tank 7. A tail cover unit 30 is provided to cover at least part of the seat frames 2 and extend to a position further rearward than the main seat 8 above the rear wheel 10. The tail cover unit 30 includes a tail cover 31, a pair of expanded portions 32, a tail lamp unit 33 and a mud guard 40. The tail cover 31 is part of the body cover 11. A sub-seat 34 is provided at an upper portion of the tail cover 31 behind the main seat 8. The mud guard 40 is located at a position further rearward than the main seat 8 and above the rear wheel 10, and attached to a rear portion of the seat frame 2 to extend rearward and downward from the tail cover 31. Details of the tail cover 31, the pair of expanded portions 32 and the tail lamp unit 33 will be described below.

### (2) Tail Cover Unit

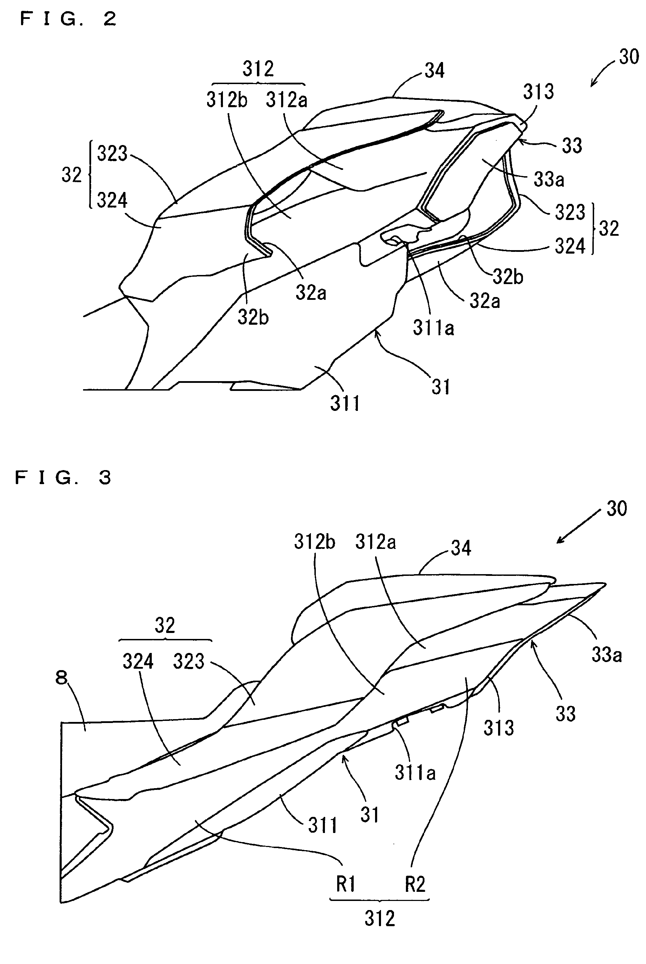

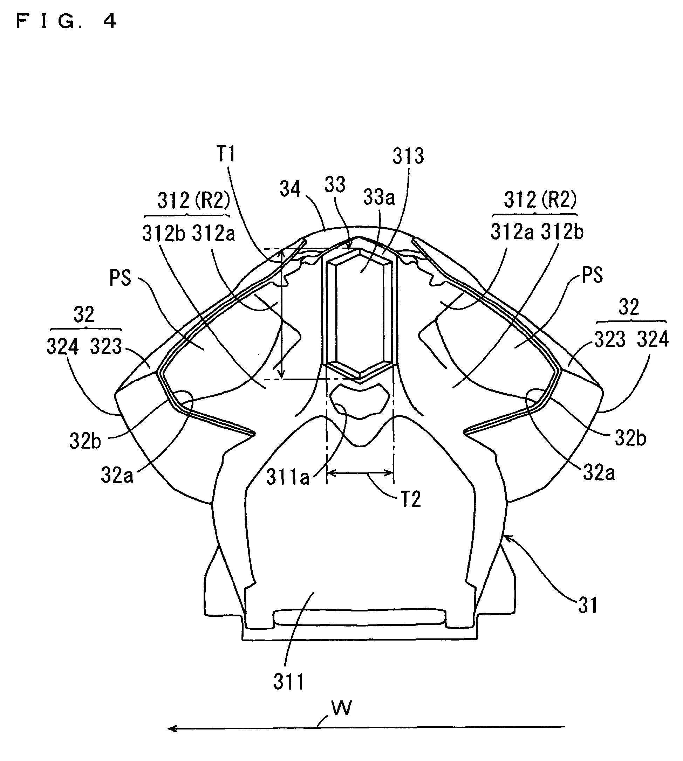

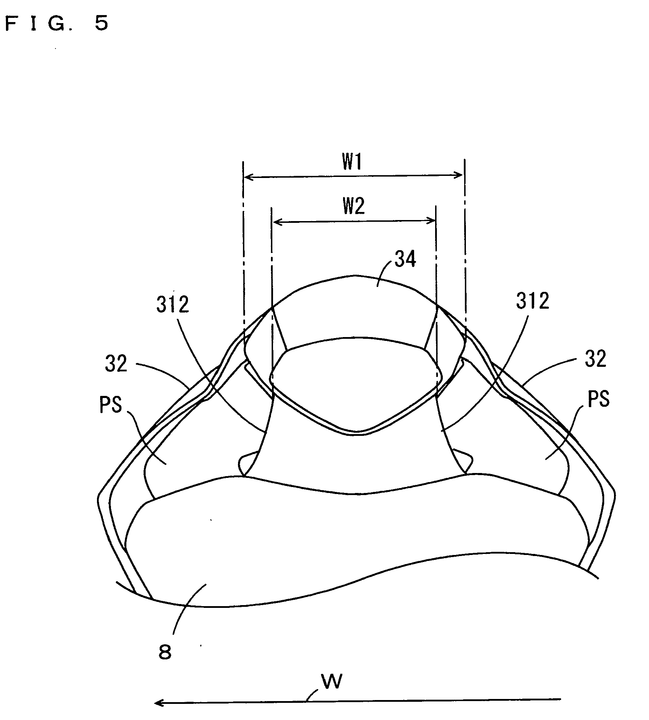

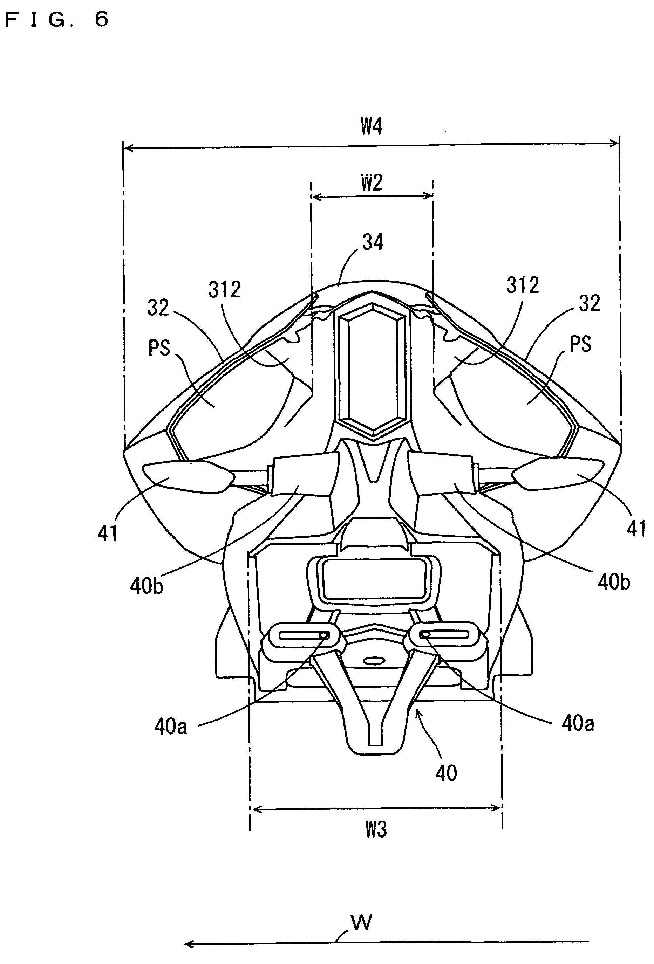

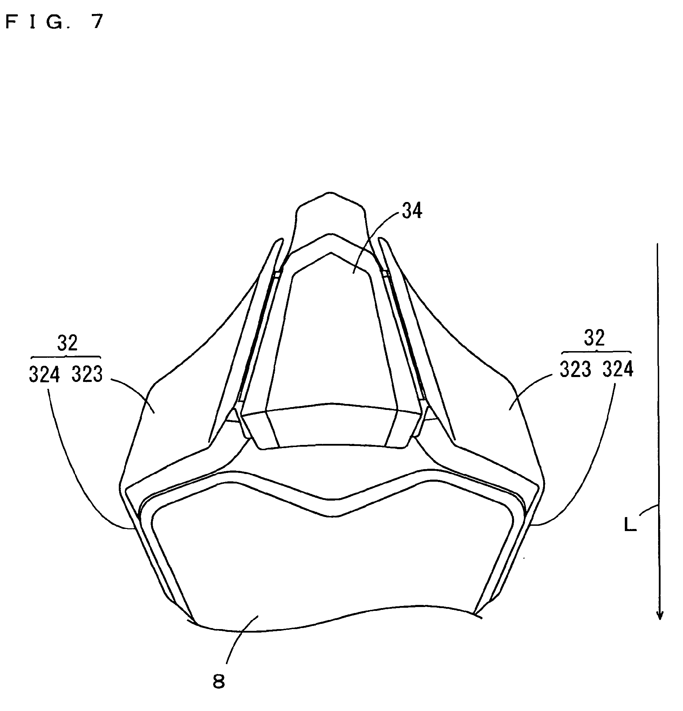

Fig. 2 is an external perspective view of the tail cover unit 30. Fig. 2 shows the tail cover unit 30 obliquely viewed from behind. Fig. 3 is a side view of the tail cover unit 30. Figs. 4 and 6 are back views of the tail cover unit 30. Fig. 5 is a front view of the tail cover unit 30. Fig. 7 is a plan view of the tail cover unit 30. The mud guard 40 of Fig. 1 is detached from the tail cover unit 30 of each of Figs. 2 to 4.

As shown in Figs. 2 and 4, the tail cover 31 has a bottom surface 311, a pair of right and left side surfaces 312 and a rear end surface 313. The width of the bottom surface 311 is gradually decreased rearward. An opening 311 a, which is used when the mud guard 40 is attached, is provided at the rear end of the bottom surface 311. The mud guard 40 is attached to a portion of the seat frame 2 (Fig. 1) exposed in the opening 311 a.

As shown in Fig. 3, each side surface 312 of the tail cover 31 is provided to obliquely extend rearward and upward from both sides of the seat frame 2 (Fig. 1) below the main seat 8. The rear end surface 313 is coupled to the rear ends of the pair of side surfaces 312 behind the seat frame 2 (Fig. 1). The rear end surface 313 obliquely extends rearward from the lower end to the upper end.

Each side surface 312 includes a front region R1 located below the main seat 8 in the side view of the vehicle and a rear region R2 that extends rearward from the front region R1. The upper end of the rear region R2 is located at a position higher than the upper end of the front region R1. The rear region R2 includes an upper inclined surface 312a and a lower inclined surface 312b.

As shown in Fig. 4, in the back view of the vehicle, each upper inclined surface 312a obliquely extends downward and inward from the upper end of each side surface 312. Each lower inclined surface 312b obliquely extends downward and outward from the lower end of the upper inclined surface 312a. The pair of side surfaces 312 extends to gradually approach each other towards the rear end surface 313.

In the width direction W, the measurement of the rear end surface 313 is smaller than the measurement of the seat frame 2 of Fig. 1. An emission surface 33a of the tail lamp unit 33 is provided at the rear end surface 313. In the back view of the vehicle, a length T1 in the top-and-bottom direction of the emission surface 33a is larger than a width T2 of the emission surface 33a.

The upper end of each expanded portion 32 is joined to the upper end of each upper inclined surface 312a of the tail cover 31, and the lower end of each expanded portion 32 is joined to each lower inclined surface 312b of the tail cover 31. In this case, each expanded portion 32 may be joined to the tail cover 31 using a joining member such as a screw, or each expanded portion 32 may be joined to the tail cover 31 by welding and the like.

Each expanded portion 32 includes an upper inclined portion 323 and a lower inclined portion 324. In the back view of the vehicle, each upper inclined portion 323 obliquely extends outward and downward from the upper end of the upper inclined surface 312a of the tail cover 31. Each lower inclined portion 324 obliquely extends inward and downward from the lower end of the upper inclined portion 323 and reaches the lower end of the lower inclined surface 312b of the tail cover 31. A through hole PS is formed between the inner surface of each expanded portion 32 and each side surface 312 of the tail cover 31.

As shown in Fig. 5, the sub-seat 34 is provided between the upper ends of the pair of expanded portions 32. A measurement W1 in the width direction W of the sub-seat 34 is larger than a minimum measurement W2 from the one side surface 312 to the other side surface 312 of the tail cover 31. That is, the pair of through holes PS is widened to positions further inward than the both ends of the sub-seat 34 in the width direction W, respectively. Thus, the weight of the tail cover 31 is decreased, and the below-mentioned effect due to the through holes PS is increased.

In Fig. 6, the tail cover unit 30 with the mud guard 40 being attached is shown. As shown in Fig. 6, plate attachment portions 40a are provided at the mud guard 40. A license plate (not shown) is attached to the plate attachment portions 40a. Further, a pair of winker attachment portions 40b is provided to extend rightward and leftward from the upper end of the mud guard 40. A winker 41 is attached to each winker attachment portion 40b.

A measurement W3 in the width direction W of the mud guard 40 is smaller than a measurement W4 in the width direction W from the outer end of the one expanded portion 32 to the outer end of the other expanded portion 32. Further, the measurement W3 in the width direction W of the mud guard 40 is larger than the minimum measurement W2 from the one side surface 312 to the other side surface 312 of the tail cover 31.

As shown in Fig. 4, each expanded portion 32 is constituted by an inner member 32a and an outer member 32b. The inner member 32a forms an inner surface of the expanded portion 32, and the outer member 32b forms an outer surface of the expanded portion 32. The inner member 32a preferably has higher rigidity than the outer member 32b. The outer member 32b is preferably made of a material that is lighter and less expensive than the inner member 32a and easily formed. The inner member 32a is made of polyamide, for example, and the outer member 32b is made of an ABS resin (acrylonitrile butadiene styrene copolymer), for example.

As shown in Fig. 3, the upper end of each expanded portion 32 is located at a position further rearward than the lower end. In the side view of the vehicle, each expanded portion 32 is provided to obliquely extend upward from the lower end to the upper end. The upper end of each expanded portion 32 extends along the upper end of the rear region R2 of each side surface 312, and at least part of the lower end of each expanded portion 32 extends along the upper end of the front region R1 of each side surface 312.

In this case, only parts of each of the upper inclined portion 323 and the lower inclined portion 324 overlap with each other in the top-and-bottom direction. As shown in Fig. 7, in the plan view of the vehicle, other portions of the lower inclined portion 324 are located at positions further forward than the upper inclined portion 323, and other portions of the upper inclined portion 323 are located at positions further rearward than the lower inclined portion 324. Therefore, splashes, which are blown up in a wide range, can be caught by the outer surface of lower inclined portion 324 and the inner surface of upper inclined surface 323.

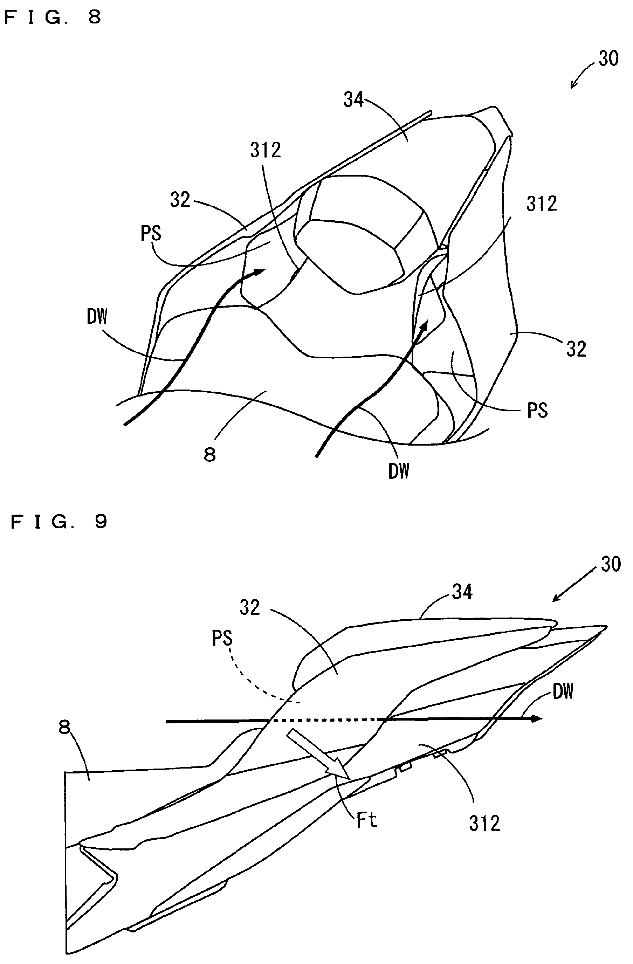

Figs. 8 and 9 are an external perspective view and a side view for explaining an air stream that passes through the through holes PS. In Figs. 8 and 9, each arrow DW indicates a flow of the air stream.

As shown in Fig. 8, during the travelling of the motorcycle 100, the air stream flows into the right and left through holes PS via the vicinity of the waist of a driver. As shown in Fig. 9, the air stream, which passes through the through holes PS, flows to a position further rearward than the vehicle.

If the through holes PS are closed, the air stream collides at the closed portions. Thus, force Ft in an obliquely rearward and downward direction (Fig. 9) is exerted on the rear portion of the motorcycle 100. The force Ft becomes resistance (air resistance) with respect to the travelling of the motorcycle 100, and prevents acceleration and high-speed travel of the motorcycle 100. Further, a load shift from the front wheel 5 (Fig. 1) to the rear wheel 10 occurs, so that the posture of the motorcycle 100 is unlikely to be stable at the time of deceleration. Further, the motorcycle 100 is likely to perform a wheelie travel at the time of the acceleration.

In contrast, in the present embodiment, the air stream flows through the through holes PS, so that the air resistance is decreased, the acceleration is increased and high-speed travel performance is enhanced. Further, because the load shift from the front wheel 5 to the rear wheel 10 is inhibited, stability of the posture of the motorcycle 100 at the time of the deceleration and acceleration is ensured.

### (3) Tail Lamp Unit

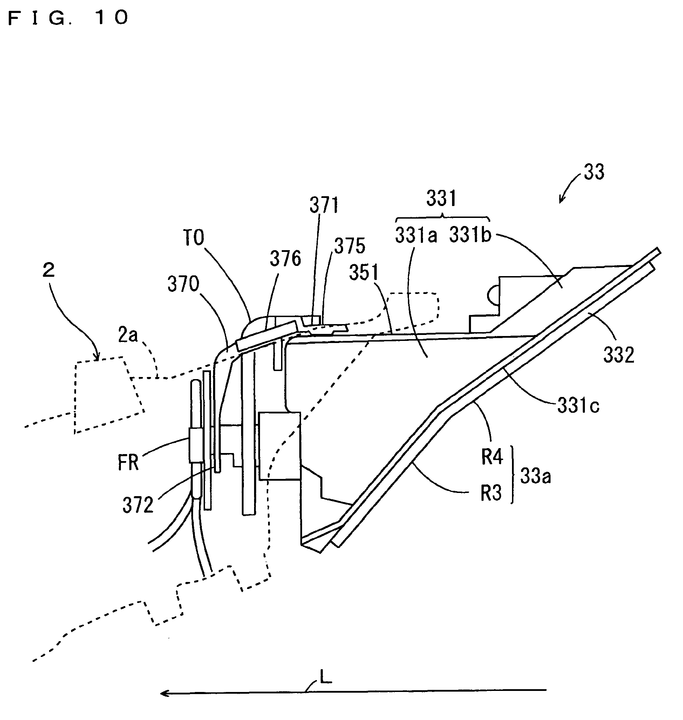

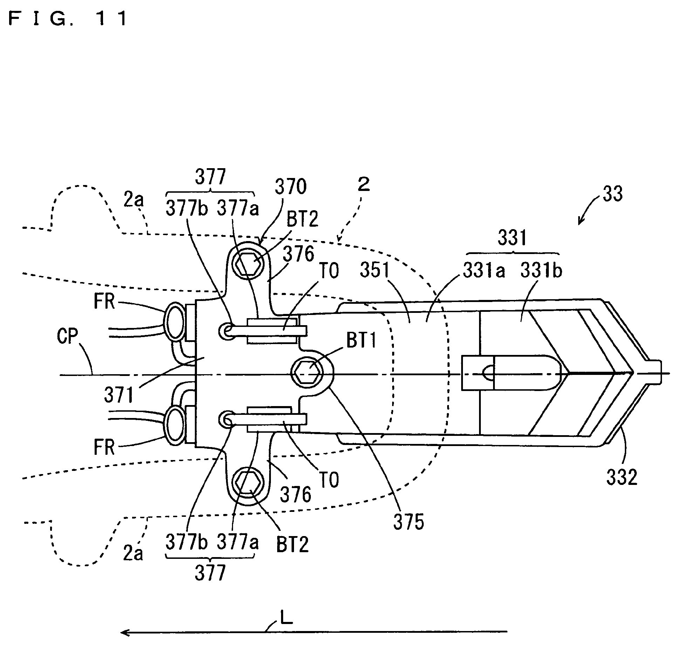

Details of the tail lamp unit 33 will be described. Fig. 10 is a side view of the tail lamp unit 33. Fig. 11 is a top view of the tail lamp unit 33.

As shown in Figs. 10 and 11, the tail lamp unit 33 includes a casing 331 and an emission cover 332. The casing 331 of the tail lamp unit 33 is stored in the tail cover 31 of Figs. 2 to 7 and attached to the seat frame 2 (Fig. 1) via a support member 370. Details of the support member 370 will be described below. In Fig. 11, a one-dot and dash line indicating a center surface CP that passes through a center of the casing 331 in the width direction and is parallel to the front-and-rear direction and the top-and-bottom direction is shown.

As shown in Fig. 10, the casing 331 has an opening surface 331 c provided to be inclined upward from the front lower end to the rear upper end. The emission cover 332 is attached to the opening surface 331c of the casing 331. A surface of the emission cover 332 directed rearward is equivalent to the emission surface 33a. The emission surface 33a has a lower region R3 and an upper region R4. With respect to a vertical direction, an inclination angle of the upper region R4 is larger than an inclination angle of the lower region R3.

The casing 331 includes a main storage 331a and an auxiliary storage 331b. The main storage 331 a has an upper surface 351 that extends substantially horizontally. The upper surface 351 is at a position lower than the upper end of the emission surface 33a. The auxiliary storage 331 b is provided to obliquely extend upward along the emission cover 332 from the rear end of the upper surface 351.

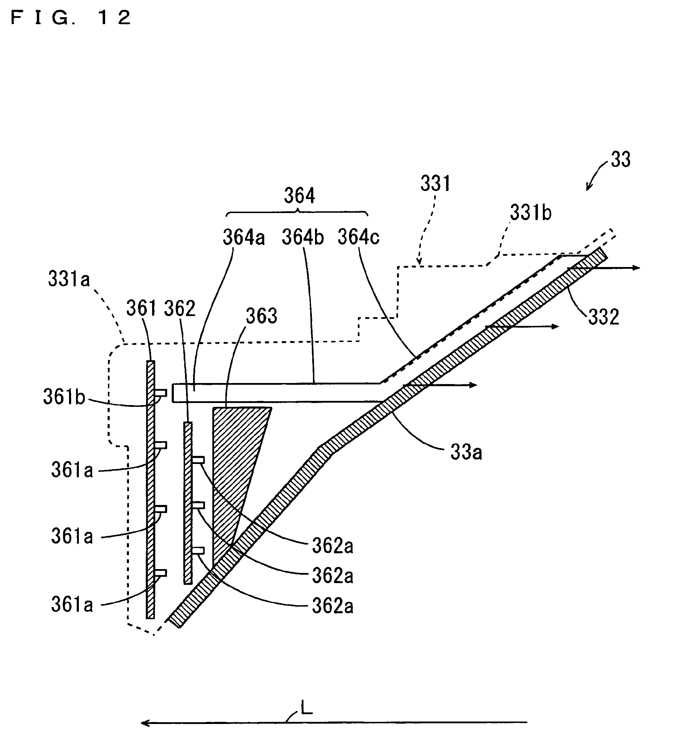

Fig. 12 is a schematic side view showing the inside of the tail lamp unit 33. As shown in Fig. 12, circuit boards 361, 362, a transparent lens 363 and a light-guiding body 364 are provided inside the casing 331. The circuit boards 361, 362 are arranged in the main storage 331 a to be perpendicular to the front-and-rear direction and to be arranged in the front-and-rear direction.

A plurality of light emitting devices 361a and a plurality of light emitting devices 361 b are attached to the surface of the circuit board 361 directed rearward. The light emitting devices 361b are arranged in the width direction. In Fig. 12, only one of the plurality of light emitting devices 361 b is shown. The plurality of light emitting devices 362a are attached to the surface of the circuit board 362 directed rearward. In the present example, the light emitting devices 361a, 361b, 362a are light-emitting diodes (LED), respectively.

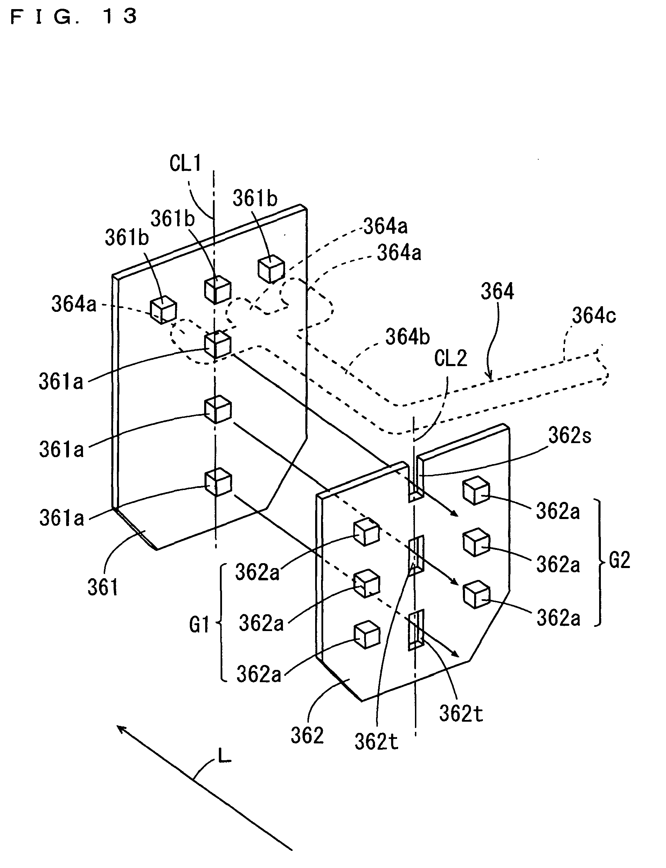

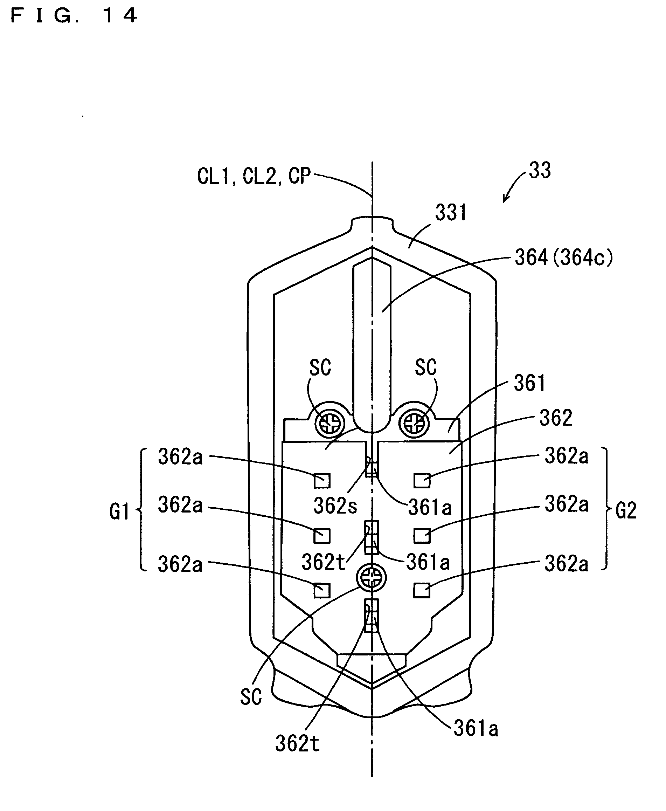

Fig. 13 is a schematic exploded perspective view of the circuit boards 361, 362 and the light-guiding body 364. Fig. 14 is a back view showing the circuit boards 361, 362 and the light-guiding body 364 arranged in the casing 331. Fig. 14 shows the tail lamp unit 33 with the emission cover 332 and the transparent lens 363 being detached as viewed from behind.

In Fig. 13, a center line CL1 extends in the top-and-bottom direction to pass through the center of the circuit board 361 in the width direction, and a center line CL2 extends in the top-and-bottom direction to pass through the center of the circuit board 362 in the width direction. At the circuit board 361, the plurality of (three in the present example) light emitting devices 361 a are arranged on the center line CL1 in the top-and-bottom direction, and the plurality of (three in the present example) light emitting devices 361 b are arranged at positions further upward than the plurality of light emitting devices 361a in a direction perpendicular to the center line CL1 (the width direction).

At the circuit board 362, a plurality of (two in the present example) openings 362t and a cutout 362s are formed to be arranged on the center line CL2 in the top-and-bottom direction. Each of the plurality of openings 362t and the cutout 362s is formed to extend in the top-and-bottom direction. In the present example, each of the plurality of openings 362t and the cutout 362s has a rectangular shape having a longer side in the top-and-bottom direction. Further, the plurality of (three in the present example) light emitting devices 362a are arranged in the top-and-bottom direction in each of the region on one side and the region on the other side of the center line CL2. Hereinafter, the plurality of light emitting devices 362a arranged in the region on the one side of the center line CL2 is referred to as a light emitting device group G1, and the light emitting device 362a arranged in the region on the other side of the center line CL2 is referred to as a light emitting device group G2.

As shown in Fig. 14, the circuit boards 361, 362 are fixed in the casing 331 by a screw SC and the like such that the plurality of openings 362t and the cutout 362s of the circuit board 362 overlap with the plurality of light emitting devices 361a on the circuit board 361, respectively. In the back view of the vehicle, the center lines CL1, CL2 of the circuit boards 361, 362 coincide with the center surface CP of the casing 331, respectively.

In this case, light, which has passed through the plurality of openings 362t and the cutout 362s, of the light emitted by the plurality of light emitting devices 361a is emitted rearward through the transparent lens 363 and the emission cover 332 of Fig. 12. As described above, each of the plurality of openings 362t and the cutout 362s is formed to extend in the top-and-bottom direction, and the plurality of light emitting devices 361 a are arranged in the top-and-bottom direction. Thus, widening in the width direction of the light that is emitted by the plurality of light emitting devices 361 a is limited.

On the other hand, the light emitted by the plurality of light emitting devices 362a is emitted rearward as it is through the transparent lens 363 and the emission cover 332 of Fig. 12.

As shown in Fig. 13, the light-guiding body 364 includes a plurality of tubular incidence portions 364a, a tubular intermediate portion 364b and a tubular emission portion 364c. One end of each of the plurality of incidence portions 364a is opposite to each of the plurality of light emitting devices 361b on the circuit board 361. The other end of each of plurality of incidence portions 364a is coupled to one end of the intermediate portion 364b. The other end of the intermediate portion 364b is coupled to one end of the emission portion 364c.

As shown in Fig. 12, the intermediate portion 364b extends substantially horizontally, and the emission portion 364c obliquely extends upward to be parallel to the emission surface 33a while being close to or being in contact with the emission cover 332. The other end of the emission portion 364c is located near the upper end of the emission surface 33a. A portion including the other end of the emission portion 364c is stored in the auxiliary storage 331 b of Fig. 10. As shown in Fig. 14, in the back view of the vehicle, the emission portion 364c extends in the top-and-bottom direction at a position further upward than the plurality of light emitting devices 361 a on the center surface CP of the casing 331.

As shown in Fig. 12, the light emitted by each light emitting device 361 b is incident from one end of each incidence portion 364a to the light-guiding body 364. The light repeats to be reflected at the inner surface of each of the incidence portion 364a, the intermediate portion 364b and the emission portion 364c, and is led to the entire light-guiding body 364. Inner surface processing is performed on the emission portion 364c such that light is emitted rearward. Thus, light is emitted rearward from the emission portion 364c through the emission cover 332.

In this manner, a light emission region is extended in the top-and-bottom direction using the light-guiding body 364. Thus, the size of the circuit boards 361, 362 can be decreased, and the size of the casing 331 that stores the circuit boards 361, 362 can be decreased. Therefore, flexibility in arrangement of the tail lamp unit 33 is improved. In the present example, because a space is ensured above the upper surface 351 of the main storage 331 a of the casing 331, the tail lamp unit 33 can be arranged such that the seat frame 2 is located in this space. As a result, the measurement in the top-and-bottom direction of the tail cover unit 30 can be decreased.

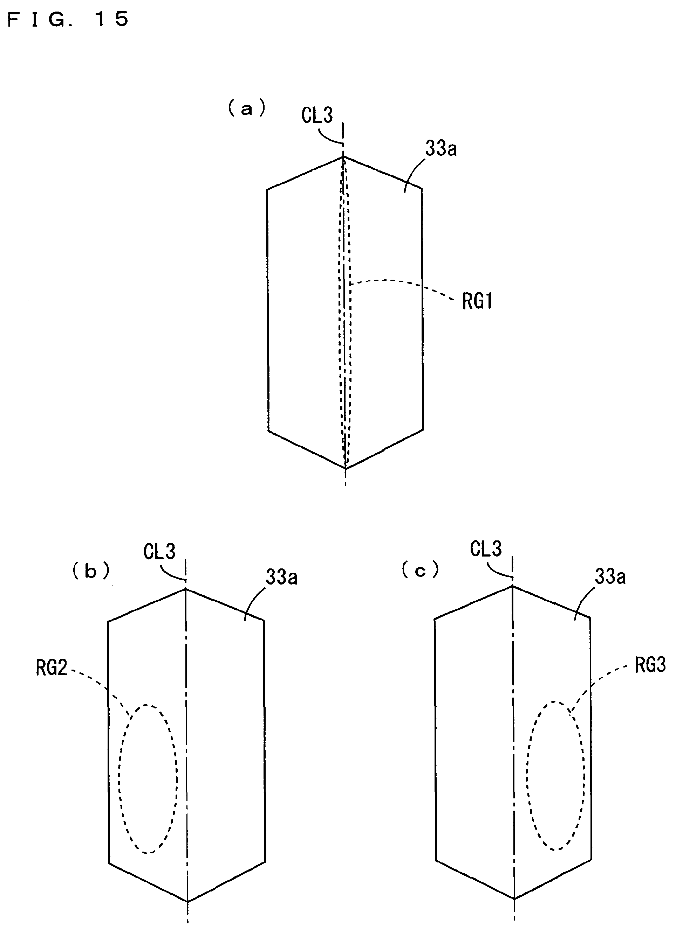

Figs. 15(a) to 15(c) are schematic diagrams for explaining the light emitted from the tail lamp unit 33. In Figs. 15(a) to 15(c), the emission surface 33a of the tail lamp unit 33 in the back view of the vehicle is shown. Further, in Figs. 15(a) to 15(c), the center line CL3 extends in the top-and-bottom direction to pass through the center of the emission surface 33a in the width direction. The center line CL3 is on the center surface CP of the casing 331 (Fig. 11).

In the present embodiment, the plurality of light emitting devices 361 a and the plurality of light emitting devices 361 b emit light simultaneously. In this case, as shown in Fig. 15(a), light is emitted from a region RG1 that is long and narrow in the top-and-bottom direction on the center line CL3 of the emission surface 33a.

The plurality of light emitting devices 362a included in the light emitting device group G1 emit light simultaneously, and the plurality of light emitting devices 362a included in the light emitting device group G2 emit light simultaneously. Further, the light emitting device group G1 and the light emitting device group G2 can emit light selectively.

When the light emitting device group G1 emits light, light is emitted from a region RG2 of the emission surface 33a on one side of the center line CL3 as shown in Fig. 15(b). When the light emitting device group G2 emits light, light is emitted from a region RG3 of the emission surface 33a on the other side of the center line CL3 as shown in Fig. 15(c). Each of the regions RG2, RG3 is larger in the width direction and smaller in the top-and-bottom direction than the region RG1. For example, when light is emitted from the region RG1, light is simultaneously emitted from the regions RG2, RG3. Further, light is selectively emitted from the regions RG2, RG3, so that the tail lamp unit 33 may function as a turn indicator (a winker).

### (4) Support Member

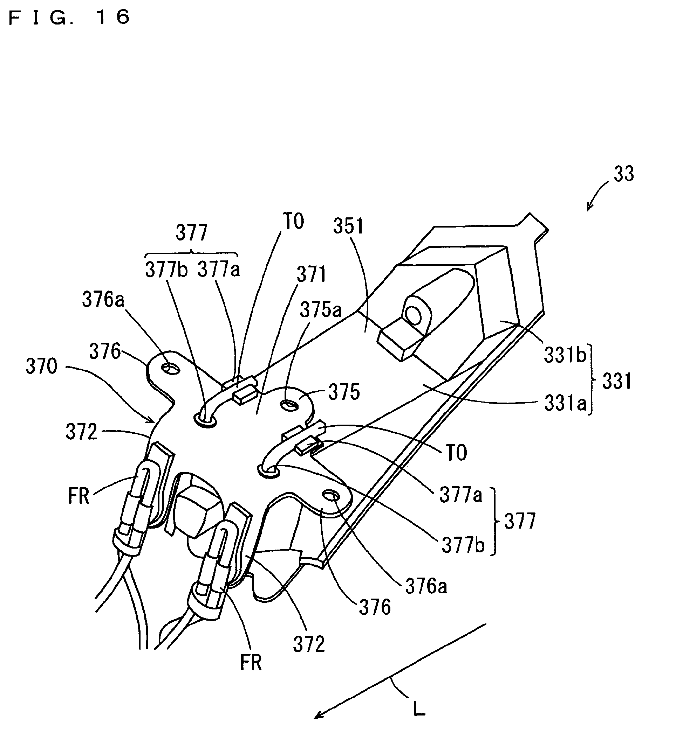

Fig. 16 is an external perspective view showing the support member 370 being attached to the tail lamp unit 33. In Fig. 16, the support member 370 and the tail lamp unit 33 as obliquely viewed from the front is shown. The support member 370 will be described with reference to the above-mentioned Figs. 10 and 11, and Fig. 16.

As shown in Fig. 16, the support member 370 includes a lamp attachment portion 371 and a pair of resistance attachment portions 372. The lamp attachment portion 371 is provided to extend substantially horizontally. The pair of resistance attachment portions 372 is provided to curve and extend downward from the front end of the lamp attachment portion 371, respectively.

The lamp attachment portion 371 includes a lamp fixing piece 375 and a pair of frame fixing pieces 376. The lamp fixing piece 375 is provided to overlap with the upper surface 351 of the casing 331 of the tail lamp unit 33. The pair of frame fixing pieces 376 is provided to extend externally of the casing 331 in the width direction, respectively. A through hole 375a is formed in the lamp fixing piece 375, and a through hole 376a is formed in each frame fixing piece 376.

An attachment hole (not shown) is formed in a portion at which the lamp fixing portion 375 of the support member 370 is arranged on the upper surface 351 of the casing 331 of the tail lamp unit 33. A bolt BT1 (Fig. 11) is inserted into the through hole 375a of the lamp fixing piece 375 and the attachment hole of the upper surface 351 of the casing 331, and a nut (not shown) is fastened at one end of the bolt in the casing 331. Thus, the casing 331 is fixed to the support member 370. The casing 331 may be fixed to the support member 370 by a bullet terminal instead of the bolt BT1 and the nut.

As shown in Fig. 11, the seat frame 2 includes a pair of attachment portions 2a that extends in the front-and-rear direction. The rear ends of the pair of attachment portions 2a are curved inward and integrated with each other, respectively. The pair of frame fixing pieces 376 of the support member 370 is arranged to overlap with the pair of attachment portions. In this state, the support member 370 is fixed to the seat frame 2 by bolts BT2 and nuts (not shown). In this manner, the tail lamp unit 33 is fixed to the seat frame 2 via the support member 370.

As shown in Fig. 16, a pair of tool holders 377 is provided at the lamp attachment portion 371 of the support member 370. Each tool holder 377 includes a fitting portion 377a made of a pair of protrusions and a through hole 377b. In each tool holder 377, a tool TO is held. Each tool TO is used when various components such as the tail cover 31, the tail lamp unit 33 and the like are attached, detached and the like.

In the present example, a hexagonal wrench is held by each tool holder 377 as the tool TO. Specifically, a long side portion of the hexagonal wrench is inserted into the through hole 377b, and a short side portion of the hexagonal wrench is fitted between the pair of protrusions of the fitting portion 377a. A tool TO, which is attached to the one tool holder 377, is preferably different from a tool TO attached to the other tool holder 377. In the present example, two hexagonal wrenches in different sizes are attached to the pair of tool holders 377, respectively.

A resistance member FR is attached to each resistance attachment portion 372 of the support member 370. The resistance member FR is resistance that is used when the winker 41 (Fig. 6) is prevented from flashing at a high speed, for example.

In this manner, the tail lamp unit 33, the tools TO and the resistance members FR are supported by the common support member 370, respectively. Thus, the number of components in the tail cover 31 can be decreased. Therefore, flexibility in design of the tail cover 31 is improved.

### (5) Effects

In the motorcycle 100 according to the present embodiment, the mud guard 40 and the tail cover unit 30 are provided above the rear wheel 10, and the pair of expanded portions 32 is provided to extend outward from the both side surfaces 312 of the tail cover 31. In the width direction W, the measurement from the outer end of the one expanded portion 32 to the outer end of the other expanded portion 32 is larger than the measurement of the mud guard 40. Thus, even when splashes such as dust, mud water or the like splashed by the rear wheel 10 are blown up outside the mud guard 40, the splashes are caught by the pair of expanded portions 32. Therefore, splashes are prevented from coming into contact with the driver and a passenger without an increase in measurement in the width direction W of the tail cover 31. As a result, the weight of the motorcycle 100 can be decreased.

Further, the through hole PS is formed between each side surface 312 of the tail cover 31 and the inner surface of each expanded portion 32. In this case, because air flows through the through hole PS, an increase in air resistance during the travelling is prevented, and a travelling feeling of the driver is improved. Further, splashes splashed by the rear wheel 10 is blown off to a position further rearward than the motorcycle 100 by the air stream that passes through each through hole PS. Thus, splashes are less likely to come into contact with the rider.

Further, the measurement in the width direction W of the emission surface 33a of the tail lamp unit 33 is smaller than the measurement in the width direction W of the seat frame 2, and the measurement in the width direction W of the emission surface 33a is smaller than the measurement in the top-and-bottom direction H in the back view of the vehicle. Thus, it is possible to emit rearward a sufficient amount of light from the emission surface 33a of the tail lamp unit 33 without increasing the measurement in the width direction W of the tail cover 31. Therefore, the measurement in the vehicle width direction of the tail cover 31 can be decreased while visibility of the emitted light of the tail lamp unit 33 is ensured.

Further, each expanded portion 32 is made of the inner member 32a and the outer member 32b, the inner member 32a has higher rigidity than the outer member 32b, and the outer member 32b is lighter than the inner member 32a. Therefore, the weight of the expanded portion 32 can be decreased by the outer member 32b while the rigidity of the expanded portion 32 is ensured by the inner member 32a. Further, it is possible to inhibit an increase in cost by using a material that is inexpensive and easily formed for the inner member 32a.

Further, each expanded portion 32 is provided to obliquely extend upward from the front region R1 to the rear region R2 of the tail cover 31. Thus, because each expanded portion 32 extends in the front-and-rear direction in the plan view of the vehicle, an area of each expanded portion 32 is sufficiently ensured. Therefore, splashes, which are blown up in a wide range, can be caught by each expanded portion 32, and splashes can be sufficiently prevented from coming into contact with the driver and the passenger.

Further, in the tail lamp unit 33, the light emitted by the plurality of light emitting devices 361a on the circuit board 361 is emitted rearward from the emission surface 33a, and the light emitted by the plurality of light emitting devices 361b is emitted rearward from the emission surface 33a through the light-guiding body 364. Thus, a sufficient amount of light can be emitted while a space occupied by the circuit board 361 is decreased.

Further, the plurality of light emitting devices 361 a are arranged on the circuit board 361 in the top-and-bottom direction, and the light-guiding body 364 is provided to extend in the top-and-bottom direction in the back view of the vehicle. Thus, the measurement in the width direction of the tail lamp unit 33 can be decreased while a sufficient amount of light is ensured. As a result, the measurement in the width direction W of the tail cover 31 can be decreased, and the weight of the motorcycle 100 can be decreased.

Further, the rear end surface 313 of the tail cover 31 and the emission surface 33a of the tail lamp unit 33 are provided to obliquely extend upward from the lower end to the upper end. Thus, an area of the emission surface 33a can be ensured while an increase in measurement in the top-and-bottom direction of the tail cover 31 is inhibited.

### (6) Other Embodiments

### (6-1)

While light is emitted from the linearly region extending in the top-and-bottom direction of the emission surface 33a of the tail lamp unit 33 in the above-mentioned embodiment, the present invention is not limited to this. Light may be emitted from a rectangular region, a circular region or a curved-shaped region of the emission surface 33a.

### (6-2)

While the tail lamp unit 33 includes the light-guiding body 364 in the above-mentioned embodiment, the present invention is not limited to this. The light emitted by the plurality of light emitting devices may be emitted from the emission surface 33a of the tail lamp unit 33 without the use of the light-guiding body 364.

### (6-3)

While the above-mentioned embodiment is an example in which the present invention is applied to the motorcycle, the invention is not limited to this. The present invention may be applied to another straddle-type vehicle such as a motor tricycle, an ATV (All Terrain Vehicle) or the like.

### (7) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a straddle-type vehicle, the head pipe 1 a is an example of a head pipe, the main frame 1 is an example of a main frame, the seat frame 2 is an example of a seat frame, the rear wheel 10 is an example of a rear wheel, the main seat 8 is an example of a seat, the tail cover unit 30 is an example of a tail cover unit, the tail cover 31 is an example of a tail cover, the side surface 312 is an example of a right side surface portion and a left side surface portion, the mud guard 40 is an example of a mud catcher, the tail lamp unit 33 is an example of a tail lamp unit, the emission surface 33a is an example of an emission surface, the expanded portion 32 is an example of a right expanded portion and a left expanded portion, and the through hole PS is an example of a right through hole and a left through hole.

Further, the inner member 32a is an example of an inner member, the outer member 32b is an example of an outer member, the front region R1 is an example of a front region, the rear region R2 is an example of a rear region, the circuit board 361 is an example of a circuit board, the lower region R3 is an example of a first region, the upper region R4 is an example of a second region, the light emitting device 361a is an example of a first light emitting device, the light emitting device 361b is an example of a second light emitting device and a light-guiding body 364 is an example of a light-guiding body.

Further, the incidence portion 364a is an example of an incidence portion, the emission portion 364c is an example of an emission portion, the support member 370 is an example of a support member, the resistance member FR is an example of a resistance member and the tool TO is an example of a tool.

As each of constituent elements recited in the claims, various other elements having configurations or functions described in the claims can be also used.

### INDUSTRIAL APPLICABILITY

The present invention can be effectively utilized for various straddle-type vehicle.

## Claims

1. A straddle-type vehicle (100) comprising:
a pair of right and left seat frames (2);
a seat (8), supported by the pair of right and left seat frames (2) above the pair of right and left seat frames (2), on which a driver is seated;
a rear wheel (10) arranged at a position further downward than the pair of right and left seat frames (2);
a mud catcher (40) that is located at a position further rearward than the seat (8) and above the rear wheel (10), and extends rearward and downward from the pair of right and left seat frames (2);
a tail lamp unit (33) supported by the pair of right and left seat frames (2) above the mud catcher (40);
a tail cover (31) arranged above the rear wheel (10) and outside the seat frame (2) and the tail lamp unit (33);
a right expanded portion (32) provided at a position further rightward than the tail cover (31) in a vehicle width direction; and
a left expanded portion (32) provided at a position further leftward than the tail cover (31) in the vehicle width direction, **characterized in that**
the tail lamp unit (33) has an emission surface (33a) having a measurement in a top-and-bottom direction that is larger than a measurement in the vehicle width direction at a rear end surface,
the tail cover (31) has
a right side surface portion (312) that extends in a front-and-rear direction at a position further rightward than the tail lamp unit (33), wherein the right expanded portion (32) is arranged outside the right side surface portion (312), and
a left side surface portion (312) that extends in the front-and-rear direction at a position further leftward than the tail lamp unit (33), wherein the left expanded portion (32) is arranged outside the left side surface portion (312),
a right through hole (PS) that extends in the front-and-rear direction between the right expanded portion (32) and the right side surface portion (312) is formed,
a left through hole (PS) that extends in the front-and-rear direction between the left expanded portion (32) and the left side surface portion (312) is formed, and
a measurement in the vehicle width direction of the mud catcher (40) is smaller than a measurement in the vehicle width direction from an outer end of the right expanded portion (32) to an outer end of the left expanded portion (32), and larger than a measurement in the vehicle width direction from the right side surface portion (312) to the left side surface portion (312).

2. The straddle-type vehicle (100) according to claim 1, wherein
the right expanded portion (32) extends outward in the vehicle width direction and obliquely downward from the right side surface portion (312) of the tail cover (31), and extends inward to reach the right side surface portion (312) of the tail cover (31), in a back view of the vehicle (100), and
the left expanded portion (32) extends outward in the vehicle width direction and obliquely downward from the left side surface portion (312) of the tail cover (31), and extends inward to reach the left side surface portion (312) of the tail cover (31), in the back view of the vehicle (100).

3. The straddle-type vehicle (100) according to claim 1 or 2, wherein
each of the right expanded portion (32) and the left expanded portion (32) has a configuration in which an inner member (32a) and an outer member (32b) overlap with each other,
the inner member (32a) forms each of inner surfaces of the right expanded portion (32) and the left expanded portion (32), and has higher rigidity than the outer member (32b), and
the outer member (32b) forms each of outer surfaces of the right expanded portion (32) and the left expanded portion (32), and is lighter than the inner member (32a).

4. The straddle-type vehicle (100) according to any one of claims 1 to 3, wherein
each of the right side surface portion (312) and the left side surface portion (312) includes a front region (R1) located below the seat (8) and a rear region (R2) located at a position further rearward than the front region (R1), in a side view of the vehicle (100),
an upper end of the rear region (R2) is at a position higher than an upper end of the front region (R1),
an upper end of the right expanded portion (32) extends along an upper end of the rear region (R2) of the right side surface portion (312),
at least part of a lower end of the right expanded portion (32) extends along an upper end of the front region (R1) of the right side surface portion (312),
an upper end of the left expanded portion (32) extends along an upper end of the rear region (R2) of the left side surface portion (312), and
at least part of a lower end of the left expanded portion (32) extends along an upper end of the front region (R1) of the left side surface portion (312).

5. The straddle-type vehicle (100) according to any one of claims 1 to 4, wherein
the tail lamp unit (33) includes
a circuit board (361) provided in the tail cover (31) and has one surface facing a first region (R3) of the emission surface (33a),
a first light emitting device (361 a) attached to the one surface of the circuit board (361) to emit light to the first region (R3) of the emission surface (33a),
a second light emitting device (361 b) attached to the one surface of the circuit board (361), and
a light-guiding body (364) provided in the tail cover (31) and leads light emitted from the second light emitting device (361 b) to a second region (R4) different from the first region (R3) of the emission surface (33a).

6. The straddle-type vehicle (100) according to claim 5, wherein
the first and second regions (R3, R4) of the emission surface (33a) are arranged in the top-and-bottom direction in the back view of the vehicle (100), and
the light-guiding body (364) includes
an incidence portion (364a) to which light emitted by the second light emitting device (361 b) is incident, and
an emission portion (364c) that is provided to extend in the top-and-bottom direction in the back view of the vehicle (100), and emits light incident to the incidence portion (364a) to the second region (R4) of the emission surface (33a).

7. The straddle-type vehicle (100) according to claim 6, wherein
a rear end surface (313) of the tail cover (31)is provided to obliquely extend upward from a lower end to an upper end,
the circuit board (361) is arranged to extend in the top-and-bottom direction,
the second region (R4) of the emission surface (33a) is located at a position further upward than the first region (R3), and
the emission portion (364c) of the light-guiding body (364) and the first light emitting device (361a) are linearly arranged in the top-and-bottom direction in the back view of the vehicle (100).

8. The straddle-type vehicle (100) according to any one of claims 5 to 7, further comprising a support member (370) that is used when the tail lamp unit (33) is supported at the seat frame (2) in the tail cover (31), and
the support member (370) is configured to support a resistance member (FR) and a support tool (TO) to be detachably attachable.

## Patentansprüche

1. Ein Grätsch-Typ-Fahrzeug (100), das folgende Merkmale aufweist:
ein Paar aus rechtem und linkem Sitzrahmen (2);
einen Sitz (8), der durch das Paar aus rechtem und linkem Sitzrahmen (2) oberhalb des Paars aus rechtem und linkem Sitzrahmen (2) getragen wird und auf dem ein Fahrer sitzt;
ein Hinterrad (10), das an einer Position angeordnet ist, die weiter unten liegt als das Paar aus rechtem und linkem Sitzrahmen;
ein Schutzblech (40), das sich an einer Position befindet, die weiter hinten als der Sitz (8) und oberhalb des Hinterrads (10) liegt und sich von dem Paar aus rechtem und linkem Sitzrahmen (2) nach hinten und nach unten erstreckt;
eine Rückleuchteneinheit (33), die durch das Paar aus rechtem und linkem Sitzrahmen (2) oberhalb des Schutzblechs (40) getragen wird;
eine Rückabdeckung (31), die oberhalb des Hinterrads (10) und außerhalb des Sitzrahmens (2) und der Rückleuchteneinheit (33) angeordnet ist;
einen rechten erweiterten Abschnitt (32), der an einer Position vorgesehen ist, die in einer Fahrzeugbreitenrichtung weiter rechts liegt als die Rückabdeckung (31); und
einen linken erweiterten Abschnitt (32), der an einer Position vorgesehen ist, die in der Fahrzeugbreitenrichtung weiter links liegt als die Rückabdeckung (31), **dadurch gekennzeichnet, dass**:
die Rückleuchteneinheit (33) eine Emissionsoberfläche (33a) mit einer Abmessung in einer Oben-Unten-Richtung aufweist, die größer ist als eine Abmessung in der Fahrzeugbreitenrichtung an einer Rückendoberfläche,
die Rückabdeckung (31) folgende Merkmale aufweist:
einen Rechte-Seite-Oberflächenabschnitt (312), der sich in einer Vorne-Hinten-Richtung an einer Position erstreckt, die weiter rechts liegt als die Rückleuchteneinheit (33), wobei der rechte erweiterte Abschnitt (32) außerhalb des Rechte-Seite-Oberflächenabschnitts (312) angeordnet ist, und
einen Linke-Seite-Oberflächenabschnitt (312), der sich in der Vorne-Hinten-Richtung an einer Position erstreckt, die weiter links liegt als die Rückleuchteneinheit (33), wobei der linke erweiterte Abschnitt (32) außerhalb des Linke-Seite-Oberflächenabschnitts (312) angeordnet ist,
ein rechtes Durchgangsloch (PS), das sich in der Vorne-Hinten-Richtung erstreckt, zwischen dem rechten erweiterten Abschnitt (32) und dem Rechte-Seite-Oberflächenabschnitt (312) gebildet ist,
ein linkes Durchgangsloch (PS), das sich in der Vorne-Hinten-Richtung erstreckt, zwischen dem linken erweiterten Abschnitt (32) und dem Linke-Seite-Oberflächenabschnitt (312) gebildet ist, und
eine Abmessung des Schutzblechs (40) in der Fahrzeugbreitenrichtung kleiner ist als eine Abmessung von einem äußeren Ende des rechten erweiterten Abschnitts (32) zu einem äußeren Ende des linken erweiterten Abschnitts (32) in der Fahrzeugbreitenrichtung und in der Fahrzeugbreitenrichtung größer ist als eine Abmessung von dem Rechte-Seite-Oberflächenabschnitt (312) zu dem Linke-Seite-Oberflächenabschnitt (312).

2. Das Grätsch-Typ-Fahrzeug (100) gemäß Anspruch 1, bei dem:
der rechte erweiterte Abschnitt (32) sich in der Fahrzeugbreitenrichtung nach außen und von dem Rechte-Seite-Oberflächenabschnitt (312) der Rückabdeckung (31) schräg nach unten erstreckt und sich in einer Rückansicht des Fahrzeugs (100) nach innen erstreckt und den Rechte-Seite-Oberflächenabschnitt (312) der Rückabdeckung (31) erreicht, und
der linke erweiterte Abschnitt (32) sich in der Fahrzeugbreitenrichtung nach außen und von dem Linke-Seite-Oberflächenabschnitt (312) der Rückabdeckung (31) schräg nach unten erstreckt und sich in der Rückansicht des Fahrzeugs (100) nach innen erstreckt und den Linke-Seite-Oberflächenabschnitt (312) der Rückabdeckung (31) erreicht.

3. Das Grätsch-Typ-Fahrzeug (100) gemäß Anspruch 1 oder 2, bei dem:
jeder des rechten erweiterten Abschnitts (32) und des linken erweiterten Abschnitts (32) eine Ausbildung aufweist, bei der ein Innenbauteil (32a) und ein Außenbauteil (32b) einander überlappen,
das Innenbauteil (32a) alle Innenoberflächen des rechten erweiterten Abschnitts (32) und des linken erweiterten Abschnitts (32) bildet und eine höhere Steifigkeit besitzt als das Außenbauteil (32b), und
das Außenbauteil (32b) alle Außenoberflächen des rechten erweiterten Abschnitts (32) und des linken erweiterten Abschnitts (32) bildet und leichter ist als das Innenbauteil (32a).

4. Das Grätsch-Typ-Fahrzeug (100) gemäß einem der Ansprüche 1 bis 3, bei dem:
jeder des Rechte-Seite-Oberflächenabschnitts (312) und des Linke-Seite-Oberflächenabschnitts (312) eine Vorderregion (R1), die sich unter dem Sitz (8) befindet, und eine Rückregion (R2) aufweist, die sich an einer Position befindet, die in einer Seitenansicht des Fahrzeugs (100) weiter hinten liegt als die Vorderregion (R1),
ein oberes Ende der Rückregion (R2) an einer Position liegt, die höher ist als ein oberes Ende der Vorderregion (R1),
ein oberes Ende des rechten erweiterten Abschnitts (32) sich entlang eines oberen Endes der Rückregion (R2) des Rechte-Seite-Oberflächenabschnitts (312) erstreckt,
zumindest ein Teil eines unteren Endes des rechten erweiterten Abschnitts (32) sich entlang eines oberen Endes der Vorderregion (R1) des Rechte-Seite-Oberflächenabschnitts (312) erstreckt,
ein oberes Ende des linken erweiterten Abschnitts (32) sich entlang eines oberen Endes der Rückregion (R2) des Linke-Seite-Oberflächenabschnitts (312) erstreckt, und
zumindest ein Teil eines unteren Endes des linken erweiterten Abschnitts (32) sich entlang eines oberen Endes der Vorderregion (R1) des Linke-Seite-Oberflächenabschnitts (312) erstreckt.

5. Das Grätsch-Typ-Fahrzeug (100) gemäß einem der Ansprüche 1 bis 4, bei dem:
die Rückleuchteneinheit (33) folgende Merkmale aufweist:
eine Schaltungsplatine (361), die in der Rückabdeckung (31) vorgesehen ist und eine Oberfläche aufweist, die einer ersten Region (R3) der Emissionsoberfläche (33a) zugewandt ist,
eine erste lichtemittierende Vorrichtung (361 a), die an der einen Oberfläche der Schaltungsplatine (361) angebracht ist, um Licht an die erste Region (R3) der Emissionsoberfläche (33a) zu emittieren,
eine zweite lichtemittierende Vorrichtung (361 b), die an der einen Oberfläche der Schaltungsplatine (361) angebracht ist, und
einen Lichtleitkörper (364), der in der Rückabdeckung (31) vorgesehen ist und Licht, das aus der zweiten lichtemittierenden Vorrichtung (361b) emittiert wird, zu einer zweiten Region (R4) führt, die sich von der ersten Region (R3) der Emissionsoberfläche (33a) unterscheidet.

6. Ein Grätsch-Typ-Fahrzeug (100) gemäß Anspruch 5, bei dem:
die erste und die zweite Region (R3, R4) der Emissionsoberfläche (33a) in der Rückansicht des Fahrzeugs (100) in der Oben-Unten-Richtung angeordnet sind, und
der Lichtleitkörper (364) folgende Merkmale aufweist:
einen Einfallsabschnitt (364a), auf den Licht einfällt, das durch die zweite lichtemittierende Vorrichtung (361 b) emittiert wird, und
einen Emissionsabschnitt (364c), der so vorgesehen ist, dass er sich in der Rückansicht des Fahrzeugs (100) in der Oben-Unten-Richtung erstreckt, und Licht, das in den Einfallsabschnitt (364a) einfällt, an die zweite Region (R4) der Emissionsoberfläche (33a) emittiert.

7. Das Grätsch-Typ-Fahrzeug (100) gemäß Anspruch 6, bei dem:
eine Rückendoberfläche (313) der Rückabdeckung (31) so vorgesehen ist, dass sie sich von einem unteren Ende zu einem oberen Ende schräg nach oben erstreckt,
die Schaltungsplatine (361) so angeordnet ist, dass sie sich in der Oben-Unten-Richtung erstreckt,
die zweite Region (R4) der Emissionsoberfläche (33a) sich an einer Position befindet, die weiter oben liegt als die erste Region (R3), und
der Emissionsabschnitt (364c) des Lichtleitkörpers (364) und die erste lichtemittierende Vorrichtung (361a) in der Rückansicht des Fahrzeugs (100) in der Oben-Unten-Richtung linear angeordnet sind.

8. Das Grätsch-Typ-Fahrzeug (100) gemäß einem der Ansprüche 5 bis 7, das ferner ein Trägerbauteil (370) aufweist, das verwendet wird, wenn die Rückleuchteneinheit (33) an dem Sitzrahmen (2) in der Rückabdeckung (31) getragen wird, und das Trägerbauteil (370) ausgebildet ist, um ein Widerstandsbauteil (FR) und ein Trägerwerkzeug (TO), das lösbar anbringbar ist, zu tragen.

## Revendications

1. Véhicule de type à selle (100), comprenant:
une paire de cadres de siège droit et gauche (2);
un siège (8) supporté par la paire de cadres de siège droit et gauche (2) au-dessus de la paire de cadres de siège droit et gauche (2), sur lequel s'assied un conducteur;
une roue arrière (10) disposée en une position plus vers le bas que la paire de cadres de siège droit et gauche (2);
un garde-boue (40) qui est situé en une position plus en arrière que le siège (8) et au-dessus de la roue arrière (10) et qui s'étend vers l'arrière et vers le bas à partir de la paire de cadres de siège droit et gauche (2);
une unité de feu arrière (33) supportée par la paire de cadres de siège droit et gauche (2) au-dessus du garde-boue (40);
un couvercle arrière (31) disposé au-dessus de la roue arrière (10) et à l'extérieur du cadre de siège (2) et de l'unité de feu arrière (33);
une partie élargie droite (32) prévue en une position plus à droite que le couvercle arrière (31) dans un sens de la largeur de véhicule; et
une partie élargie gauche (32) prévue en une position plus à gauche que le couvercle arrière (31) dans le sens de la largeur de véhicule, **caractérisé par le fait que**
l'unité de feu arrière (33) présente une surface d'émission (33a) présentant une mesure dans une direction vers le haut et vers le bas qui est supérieure à une mesure dans le sens de la largeur de véhicule à une surface d'extrémité arrière,
le couvercle arrière (31) présente
une partie de surface latérale droite (312) qui s'étend dans une direction vers l'avant et vers l'arrière en une position plus à droite que l'unité de feu arrière (33), où la partie élargie droite (32) est disposée à l'extérieur de la partie de surface latérale droite (312), et
une partie de surface latérale gauche (312) qui s'étend dans la direction vers l'avant et vers l'arrière en une position plus à gauche que l'unité de feu arrière (33), où la partie élargie gauche (32) est disposée à l'extérieur de la partie de surface latérale gauche (312),
un trou traversant droit (PS) qui s'étend dans la direction vers l'avant et vers l'arrière est formé entre la partie élargie droite (32) et la partie de surface latérale droite (312),
un trou traversant gauche (PS) qui s'étende dans la direction vers l'avant et vers l'arrière est formé entre la partie élargie gauche (32) et la partie de surface latérale gauche (312), et
une mesure dans le sens de la largeur de véhicule du garde-boue (40) est inférieure à une mesure dans le sens de la largeur de véhicule d'une extrémité extérieure de la partie de droite élargie droite (32) à une extrémité extérieure de la partie élargie gauche (32), et plus grande qu'une mesure dans le sens de la largeur de véhicule de la partie de surface latérale droite (312) à la partie de surface latérale gauche (312).

2. Véhicule du type à selle (100) selon la revendication 1, dans lequel
la partie élargie droite (32) s'étend vers l'extérieur dans le sens de la largeur de véhicule et en oblique vers le bas depuis la partie de surface latérale droite (312) du couvercle arrière (31) et s'étend vers l'intérieur pour atteindre la partie de surface latérale droite (312) du couvercle arrière (31), en vue de l'arrière du véhicule (100), et
la partie élargie gauche (32) s'étend vers l'extérieur dans le sens de la largeur de véhicule et en oblique vers le bas depuis la partie de surface latérale gauche (312) du couvercle arrière (31) et s'étend vers l'intérieur pour atteindre la partie de surface latérale gauche (312) du couvercle arrière (31), en vue de l'arrière du véhicule (100).

3. Véhicule de type à selle (100) selon la revendication 1 ou 2, dans lequel
chacune de la partie élargie droite (32) et la partie élargie gauche (32) présente une configuration dans laquelle un élément intérieur (32a) et un élément extérieur (32b) viennent en recouvrement l'un avec l'autre,
l'élément intérieur (32a) forme chacune des surfaces intérieures de la partie élargie droite (32) et de la partie élargie gauche (32) et présente une plus grande rigidité que l'élément extérieur (32b), et
l'élément extérieur (32b) forme chacune des surfaces extérieures de la partie élargie droite (32) et de la partie élargie gauche (32), et est plus léger que l'élément intérieur (32a).

4. Véhicule de type à selle (100) selon l'une quelconque des revendications 1 à 3, dans lequel
chacune parmi la partie de surface latérale droite (312) et la partie de surface latérale gauche (312) comporte une région avant (R1) située au-dessous du siège (8) et une région arrière (R2) située en une position plus vers l'arrière que la région avant (R1), en vue latérale du véhicule (100),
une extrémité supérieure de la région arrière (R2) se trouve en une position plus haute qu'une extrémité supérieure de la région avant (R1),
une extrémité supérieure de la partie élargie droite (32) s'étend le long d'une extrémité supérieure de la région arrière (R2) de la partie de surface latérale droite (312),
au moins une partie d'une extrémité inférieure de la partie élargie droite (32) s'étend le long d'une extrémité supérieure de la région avant (R1) de la partie de surface latérale droite (312),
une extrémité supérieure de la partie élargie gauche (32) s'étend le long d'une extrémité supérieure de la région arrière (R2) de la partie de surface latérale gauche (312), et
au moins une partie d'une extrémité inférieure de la partie élargie gauche (32) s'étend le long d'une extrémité supérieure de la région avant (R1) de la partie de surface latérale gauche (312).

5. Véhicule de type à selle (100) selon l'une quelconque des revendications 1 à 4, dans lequel
l'unité de feu arrière (33) comporte
une carte de circuit imprimé (361) prévue dans le couvercle arrière (31) et qui présente une surface faisant face à une première région (R3) de la surface d'émission (33a),
un premier dispositif émetteur de lumière (361a) fixé à l'une surface de la carte de circuit (361), destiné à émettre de la lumière vers la première région (R3) de la surface d'émission (33a),
un deuxième dispositif émetteur de lumière (361b) fixé à l'une surface de la carte de circuit imprimé (361), et
un corps guide-lumière (364) prévu dans le couvercle arrière (31) et qui conduit la lumière émise par le deuxième dispositif émetteur de lumière (361b) vers une deuxième région (R4) différente de la première région (R3) de la surface d'émission (33a).

6. Véhicule de type à selle (100) selon la revendication 5, dans lequel
les première et deuxième régions (R3, R4) de la surface d'émission (33a) sont disposées dans la direction vers le haut et vers le bas, en vue de l'arrière du véhicule (100), et
le corps guide-lumière (364) comporte
une partie d'incidence (364a) sur laquelle est incidente la lumière émise par le deuxième dispositif émetteur de lumière (361b), et
une partie d'émission (364c) qui est prévue de manière à s'étendre dans la direction vers le haut et vers le bas, en vue de l'arrière du véhicule (100), et émet une lumière incidente sur la partie d'incidence (364a) vers la deuxième région (R4) de la surface d'émission (33a).

7. Véhicule de type à selle (100) selon la revendication 6, dans lequel
une surface d'extrémité arrière (313) du couvercle arrière (31) est prévue de manière à s'étendre obliquement vers le haut d'une extrémité inférieure à une extrémité supérieure,
la carte de circuit (361) est disposée de manière à s'étendre dans la direction vers le haut et vers le bas,
la deuxième région (R4) de la surface d'émission (33a) est située en une position plus haute que la première région (R3), et
la partie d'émission (364c) du corps guide-lumière (364) et le premier dispositif émetteur de lumière (361a) sont disposés linéairement dans la direction vers le haut et vers le bas, en vue de l'arrière du véhicule (100).

8. Véhicule de type à selle (100) selon l'une quelconque des revendications 5 à 7, comprenant par ailleurs un élément de support (370) qui est utilisé lorsque l'unité de feu arrière (33) est supporté sur le cadre de siège (2) dans la couvercle arrière (31), et
l'élément de support (370) est configuré pour supporter un élément de résistance (FR) et un outil de support (TO) destiné à être fixé de manière amovible.
